(19) **Europäisches Patentamt** / **European Patent Office** / **Office européen des brevets**

(11) **EP 3 997 389 B1**

(12) **EUROPÄISCHE PATENTSCHRIFT**

(45) Veröffentlichungstag und Bekanntmachung des Hinweises auf die Patenterteilung:
**02.10.2024  Patentblatt 2024/40**

(21) Anmeldenummer: **20743975.3**

(22) Anmeldetag: **07.07.2020**

(51) Internationale Patentklassifikation (IPC):
**F24D 19/10** *(2006.01)*     **F04D 15/00** *(2006.01)*

(52) Gemeinsame Patentklassifikation (CPC):
**F24D 19/1012; F24D 19/1024;** F24D 2220/0207;
F24D 2220/042; Y02B 30/70

(86) Internationale Anmeldenummer:
**PCT/EP2020/069093**

(87) Internationale Veröffentlichungsnummer:
**WO 2021/008941 (21.01.2021 Gazette 2021/03)**

(54) **VERFAHREN ZUR STEUERUNG EINER ANORDNUNG AUS HEIZUNGSPUMPE UND DREI-WEGE-MISCHERVENTIL**

METHOD FOR CONTROLLING AN ARRANGEMENT CONSISTING OF A HEATING PUMP AND A THREE-WAY MIXER VALVE

PROCÉDÉ DE COMMANDE D'UN ENSEMBLE COMPOSÉ D'UNE POMPE DE CHAUFFAGE ET D'UNE VANNE MÉLANGEUSE À TROIS VOIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2019  DE 102019004838**

(43) Veröffentlichungstag der Anmeldung:
**18.05.2022  Patentblatt 2022/20**

(73) Patentinhaber: **KSB SE & Co. KGaA
67227 Frankenthal (DE)**

(72) Erfinder:
• **ECKL, Martin
67227 Frankenthal (DE)**
• **SCHULLERER, Joachim
76764 Rheinzabern (DE)**

(56) Entgegenhaltungen:
**EP-A1- 2 960 587        EP-A1- 3 037 704
DE-A1- 102012 209 367    DE-A1- 102013 005 691
DE-A1- 4 312 150         DE-C2- 4 312 150**

EP 3 997 389 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Steuerung einer Anordnung umfassend eine Heizungspumpe für die Umwälzung eines Heizungsmediums in einem geschlossenen Heizkreis und ein Drei-Wege-Mischerventil, dessen erster Zulauf mit einem Heizkessel, dessen zweiter Zulauf mit dem Rücklauf eines Lastkreises und dessen Ablauf mit dem Vorlauf des Lastkreises verbunden ist.

Mischer für Heizkreise sind Drei-Wege-Ventile und werden u.a. zur Regelung der Vorlauftemperatur in einem geschlossenen Heizkreis eingesetzt. Diese Vorgehensweise wird häufig gewählt, wenn eine gemeinsame Wärmequelle (Heizkessel oder Fernwärmesystem) gleichzeitig mehrere separierte Heizkreise versorgen soll. Eine konkrete Anwendung ist die Versorgung unterschiedlicher Gebäude bzw. Raumbereiche aus einer gemeinsamen Wärmequelle. In diesem Fall kann die Kesselsteuerung die Vorlauftemperatur der angeschlossenen Lastkreise nicht individuell regeln. Zur Abhilfe wird in jedem Lastkreis ein Drei-Wege-Ventil eingesetzt, dessen Zuläufe mit dem Heizkessel sowie dem Rücklauf des Lastkreises verbunden sind. Der Ventilabfluss ist mit dem Vorlauf des Lastkreises verbunden.

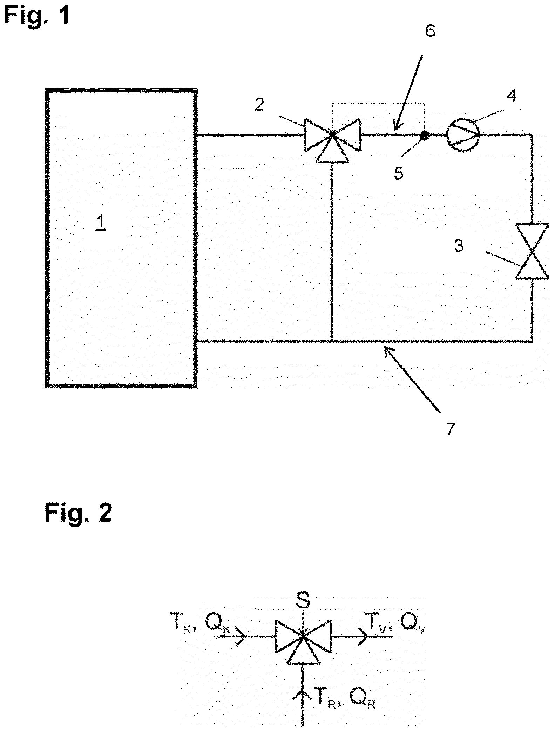

Eine schematische Darstellung eines Heizkreises mit Mischer ist der Figur 1 zu entnehmen. Die Heizanlage 1 steht mit dem ersten Zufluss des Mischers 2 in Verbindung. Der zweite Zufluss ist mit dem Rücklauf 7 des Heizkreises verbunden. Ausgangseitig ist der Mischer 2 mit der Umwälzpumpe 4 verbunden, die im Vorlauf 6 des Heizkreises installiert ist und das Heizmedium durch den angeschlossenen Lastkreis 3 sowie den Rücklauf 7 zurück zum Heizkessel 1 fördert. Die Steuerung des Kessels 1 kennt die Außentemperatur und definiert davon abhängig den Sollwert der Mediumtemperatur. Das Mischerventil 2 verfügt über eine eigene Regelung samt integriertem Temperatursensor 5, um so die Vorlauftemperatur auf einen festgelegten Sollwert einstellen zu können. Die Vorlauftemperatur wird also mittels des Temperaturfühlers 5 gemessen und gegen den Sollwert abgeglichen. Weicht die erfasste Ist-Temperatur vom Sollwert ab, passt der Mischer 2 seine Ventilstellung an, um das Mischverhältnis zwischen dem aufgeheizten Medium des Kessels 1 und dem aus dem Rücklauf 7 zurückströmenden Heizungsmedium zu verändern.

Die EP 3 037 704 A1 offenbart eine gattungsgemäße Anordnung und ein Verfahren zu deren Steuerung.

Die vorliegende Anmeldung beschäftigt sich mit der Aufgabe ein Heizkreissystem mit integriertem Mischerventil einerseits effizienter zu betreiben und anderseits die Anzahl an notwendigen Bauteilen zu reduzieren, um insbesondere einen kompakteren Aufbau zu ermöglichen.

Gelöst wird diese Aufgabe durch ein Verfahren gemäß den Merkmalen des Anspruchs 1. Vorteilhafte Ausgestaltungen des Verfahrens sind Gegenstand der abhängigen Ansprüche.

Erfindungsgemäß wird ein Verfahren zur sensorlosen Ermittlung der Mediumtemperatur in einem der Ventilanschlüsse vorgeschlagen. Das Verfahren geht davon aus, dass innerhalb des Systems die Information zur aktuellen Vorlauf- oder alternativ zur Rücklauftemperatur bereits vorliegt. Dieser Temperaturwert kann bspw. durch einen Temperatursensor erfasst werden oder aber durch die verbaute Heizungspumpe, die die Temperatur ihres Förderstromes messen oder schätzen kann, verfügbar sein. Das Verfahren sieht nunmehr vor, das Mischerventil mit wenigstens zwei unterschiedlichen Schaltstellungen anzusteuern. Die Schaltstellungen zeichnen sich durch ein unterschiedliches Mischverhältnis der beiden Zuläufe aus. Durch Auswertung des verfügbaren Temperaturwertes für entweder den Vorlauf oder aber den Rücklauf kann nun unter Berücksichtigung des Mischverhältnisses des Mischerventils, das abhängig von der Schaltstellung ist, die Temperatur des Mediums an wenigstens einem der Ventilanschlüsse berechnet werden. D.h. liegt die Information zur Vorlauftemperatur bereits vor, so kann mittels des Verfahrens die Rücklauftemperatur und/oder die Temperatur des vom Heizkessel ankommenden Mediums berechnet werden. Ist stattdessen die Rücklauftemperatur bekannt, kann die Vorlauftemperatur und/oder die Temperatur des vom Heizkessel ankommenden Mediums berechnet werden.

Durch das Verfahren lässt sich ein zusätzlicher Betriebsparameter bestimmen, der weitergehende Anwendungen, wie nachfolgend noch erläutert wird, ermöglicht, ohne dass hierfür zusätzliche Sensoren erforderlich sind.

Besonders vorteilhaft ist es, wenn die Ansteuerung des Mischerventils durch die Steuerung erfolgt, die ebenfalls für die Regelung der Heizungspumpe verantwortlich ist. Auf diese Weise kann auf eine separate, zusätzliche Steuerung des Mischerventils verzichtet werden, was eine weitere Einsparung etwaiger Bauteile möglich macht. Denkbar ist es bspw., dass die integrale Pumpenregelung der Heizungspumpe die Ansteuerung des Mischerventils übernimmt, d.h. unter anderem die Regelung der Vorlauftemperatur mittels des Mischerventils und das erfindungsgemäße Verfahren ausführt. Die benötigte Temperaturinformation wird dabei vorzugsweise unmittelbar von der Heizungspumpe bereitgehalten.

Wie bereits vorstehend angedeutet, ist es denkbar, dass die Steuerung Kenntnis von der Mediumtemperatur im Vorlauf hat, beispielsweise durch die dort verbaute Heizungspumpe, die die entsprechende Temperatur entweder mittels Sensorik oder sensorlos durch einen geeigneten Schätzalgorithmus selbstständig ermittelt. Auf Grundlage dieser bekannten Mediumtemperatur im Vorlauf kann mittels des erfindungsgemäßen Verfahrens die Mediumtemperatur im Rücklauf berechnet werden, ohne dass dafür eine gesonderte Sensorik notwendig ist.

Eine Möglichkeit zur Berechnung der gewünschten Mediumtemperatur basiert darauf, dass für jede Schaltstellung eine mathematische Gleichung bestimmt wird, die als Gleichungsparameter das Mischverhältnis für die aktuelle Schaltstellung, d.h. das Mischverhältnis der beiden Zuflüsse in Relation zum Abfluss, sowie die wenigstens drei Temperaturwerte für die einzelnen Ventilanschlüsse beinhaltet. Wird das Mischventil nunmehr in wenigstens zwei unterschiedlichen Schaltstellungen betrieben, so kann mittels Gleichsetzungsverfahren der wenigstens zwei Gleichungen nach der gewünschten unbekannten Temperatur aufgelöst werden. Notwendig zur Verfahrensausführung ist das Anfahren von zumindest zwei unterschiedlichen Schaltstellungen des Mischerventils, idealerweise werden die Schaltstellungen mit kurzem zeitlichen Abstand nacheinander angefahren, um die Wahrscheinlichkeit von Änderungen im Lastkreis bzw. der Kesselregelung zu minimieren. Wenn mehr als zwei Schaltstellungen angefahren werden, erfährt die Berechnung eine höhere Robustheit, da durch Gleichsetzung mehrerer Gleichungen die Genauigkeit des Berechnungsergebnisses gesteigert werden kann.

Denkbar ist es beispielsweise, dass für jede Schaltstellung folgende Gleichung aufgestellt werden kann:

$$T_V = T_R \cdot S + T_K \cdot (1 - S),$$

wobei $T_V$ für die Vorlauftemperatur, $T_R$ für die Rücklauftemperatur, $T_K$ für die Temperatur des vom Heizkessel bereitgestellten Heizungsmediums und S die Schieberstellung des Mischerventils charakterisiert. Dabei kann der Parameter S Werte von 0 bis 1 annehmen, wobei S = 0 für eine Schaltstellung des Drei-Wege-Ventils steht, bei der ausschließlich Medium vom Heizkessel in den Vorlauf eingespeist wird, während bei S=1 lediglich Medium aus dem Rücklaufanschluss des Drei-Wege-Ventils in den Vorlauf eingespeist wird.

Wie bereits angedeutet, lässt die nun vorliegende Information zur Vorlauf- und Rücklauftemperatur unterschiedliche Anwendungsoptionen zu. Zum einen kann mittels des nun verfügbaren Wertepaares aus Vorlauf- und Rücklauftemperatur ein Wärmemengenzähler implementiert werden, der dem Anlagenbetreiber eine Aussage über die aufgenommene Heizleistung des zu beheizenden Gebäudes bereitstellt. Die Wärmemenge berechnet sich gemäß folgender Gleichung:

$$P_H = \int Q \cdot (T_V - T_R) dt$$

Für die Implementierung eines Wärmemengenzählers muss der Förderstrom Q, die Rücklauftemperatur $T_R$ als auch die Vorlauftemperatur $T_V$ bekannt sein. Förderstrom und Temperatur des Fördermediums, je nach Einbauort der Pumpe die Vorlauf- oder Rücklauftemperatur, liegen der Pumpensteuerung ohnehin vor. Mittels des erfindungsgemäßen Verfahrens kann die unbekannte Temperatur berechnet und daher der Wärmemengenzähler implementiert werden.

Besonders vorteilhaft ist es, wenn mittels des Verfahrens Mischer und Pumpe als Mehrgrößensystem betrieben werden und dementsprechend eine optimierte, aufeinander abgestimmte Regelung von Vorlauftemperatur und Förderhöhe/Förderstrom ausgeführt wird.

Beispielsweise setzt sich die aufgenommene Heizleistung des zu beheizenden Gebäudes wie folgt zusammen:

$$P_H = c_P \cdot \rho \cdot Q \cdot (T_V \cdot T_R),$$

wobei $P_H$ für die Leistungsabgabe an den Heizkörpern des Lastkreises steht, $c_P$ die Wärmekapazität von Wasser darstellt, Q dem Förderstrom der Pumpe entspricht, ρ die Dichte von Wasser ist und $T_V$, $T_R$ die entsprechenden Temperaturen im Vor- bzw. Rücklauf sind. Alle vorgenannten Parameter sind der Steuerung bekannt, sodass zu jedem Zeitpunkt die Leistungsabgabe im Lastkreis berechnet werden kann.

Nachfolgend wird nun vorteilhafterweise vorgeschlagen, dass durch gezielte Reduzierung der Pumpendrehzahl als auch der Vorlauftemperatur mittels entsprechender Ansteuerung des Mischerventils geprüft wird, ob eine ausreichende Versorgung der zu beheizenden Räume auch bei einer reduzierten Drehzahl bzw. reduzierten Vorlauftemperatur gewährleistet ist. Es wird also für jeden Betriebszustand, das heißt bei reduzierter Drehzahl und/oder reduzierter Vorlauftemperatur erneut die Leistungsabgabe gemäß der oben bezeichneten Formel berechnet. Bleibt diese weiterhin konstant, kann von einer ausreichenden Wärmeversorgung der zu beheizenden Räume ausgegangen werden. Die konstant bleibende Leistungsabgabe ist dadurch begründet, dass die Thermostatventile an den Heizkörpern der zu beheizenden Räume bedarfsgeregelt sind und bei entsprechender Drehzahlreduktion bzw. Reduzierung der Vorlauftemperatur geeignet reagieren, sodass im Endeffekt die aufgenommene Heizleistung nahezu konstant bleibt. Erst beim Eintreten einer Unterversorgung würde die Heizleistung tatsächlich abnehmen.

Für das erfindungsgemäße Verfahren wird daher vorgeschlagen, die Drehzahl der Pumpe und/oder die Vorlauftemperatur solange zu reduzieren, bis eine entsprechende Abnahme der Heizleistung und damit eine Unterversorgung erkannt wird. Ist dies der Fall, werden im Anschluss die Vorlauftemperatur und/oder die Pumpendrehzahl durch die Steuerung gerade so weit erhöht, dass noch eine ausreichende Versorgung des zu beheizenden Gebäudes sichergestellt ist. Durch diese Vorgehensweise ist es möglich, die Drehzahl als auch die Vorlauftemperatur möglichst exakt an die benötigte Wärmemenge des Gebäudes anzupassen, um dadurch einen effizienteren Betrieb der gesamten Anlage gewährleisten zu können. Denn eine zu hohe Vorlauftemperatur führt zu einem unnötigen Wärmeverlust im Rohrleitungssystem, während eine zu hoch eingestellte Drehzahl eine zu hohe Stromaufnahme der Heizungspumpe bedeutet.

Gemäß einer optionalen Ausgestaltung des Verfahrens kann vorgesehen sein, die Anpassung der Vorlauftemperatur als auch der Pumpendrehzahl nach Detektion einer Unterversorgung gemäß definierbarer Gewichtung vorzunehmen, um die beiden Parameter mit unterschiedlicher Priorität zu berücksichtigen. Bevorzugt wird die Reduzierung der Vorlauftemperatur höher priorisiert als die Reduzierung der Drehzahl, d.h. für eine Betriebsweise mit gerade noch ausreichender Versorgung des zu beheizenden Raums wird versucht, die Vorlauftemperatur möglichst weit zu reduzieren, während im Umkehrschluss dafür eine höhere Drehzahl der Heizungspumpe in Kauf genommen wird. Dies begründet sich dadurch, dass (bezogen auf die Gesamtbilanz) die Verluste aufgrund zu hoher Mediumtemperatur stärker wiegen als die elektrischen Verluste der Pumpe aufgrund zu hoher Drehzahl.

Ein weiterer Aspekt der Erfindung betrifft ein Verfahren zum Betrieb einer Heizungsanlage bestehend aus mehreren separierten Lastkreisen und einer gemeinsamen Wärmequelle, wie dies bereits in der Einleitung beschrieben wurde. Erfindungsgemäß wird hier vorgeschlagen, dass pro Lastkreis wenigstens eine, das vorgenannte Verfahren ausführende Anordnung, bestehend aus der Umwälzpumpe sowie dem Mischerventil, eingesetzt wird. Die Steuerung der jeweiligen Anordnungen bzw. Mischerventile kann mittels einer zentralen Steuerung für sämtliche oder zumindest einen Teil der Anordnungen bzw. Mischerventile ausgeführt werden. Denkbar ist es ebenso, dass separate Steuerbausteine für jede Anordnung vorgesehen sind. Vorstellbar ist ebenso, dass die zentrale Steuerung bzw. die separaten Steuerbausteine ebenfalls eine Steuerung der jeweiligen Umwälzpumpe ausführen.

Neben dem erfindungsgemäßen Verfahren betrifft die vorliegende Erfindung zudem eine Anordnung bestehend aus einer Heizungspumpe für die Umwälzung eines Heizungsmediums in einem geschlossenen Heizkreis sowie aus einem Drei-Wege-Mischerventil mit insgesamt zwei Zuflüssen und einem Abfluss. Ferner umfasst die beanspruchte Anordnung eine gemeinsame Steuerung für die Regelung der Heizungspumpe sowie zur Steuerung des Mischerventils, um dadurch die Vorlauftemperatur auf eine gewünschte Temperatur einzuregeln. Die Verwendung einer gemeinsamen Steuerung für Mischerventil und Pumpenregelung ermöglicht ein System mit weniger Bauteilen und demzufolge auch einen kompakteren Aufbau.

Die gemeinsame Steuerung für Mischerventil und Heizungspumpe ist zur Ausführung des erfindungsgemäßen Verfahrens konfiguriert, wodurch vorzugsweise die Rücklauftemperatur bestimmt wird. Dementsprechend gelten für die Anordnung dieselben Vorteile und Eigenschaften, wie sie bereits vorstehend anhand des erfindungsgemäßen Verfahrens aufgezeigt wurden.

Neben der Anordnung betrifft die vorliegende Erfindung zudem eine Heizungspumpe mit integraler Steuerung, wobei die Steuerung konfiguriert ist, die Drehzahl der Pumpe zur Regelung der Förderhöhe der Pumpe anzupassen als auch die Schaltstellung des Drei-Wege-Mischerventils zur Regelung der Vorlauftemperatur zu steuern. Auch hier ist die integrale Steuerung der Heizungspumpe konfiguriert zur Durchführung des Verfahrens gemäß der vorliegenden Erfindung.

Zuletzt deckt die Erfindung auch eine Heizungsanlage bestehend aus mehreren separierten Lastkreisen und einer gemeinsamen Wärmequelle ab. Erfindungsgemäß wird hier vorgeschlagen, dass pro Lastkreis wenigstens eine erfindungsgemäße Anordnung zur Ausführung des erfindungsgemäßen Verfahrens eingesetzt wird. Mittels einer zentralen Steuerung werden sämtliche Mischerventile und/oder Umwälzpumpen gemäß dem erfindungsgemäßen Verfahren zentral angesteuert. Genauso gut kann jedoch jeder Lastkreis mit einem eigenen Steuerbaustein zur Steuerung des jeweiligen Mischerventils bzw. der jeweiligen Umwälzpumpe ausgestattet sein.

Weitere Vorteile und Eigenschaften der Erfindung sollen nachfolgend anhand eines in den Zeichnungen dargestellten Ausführungsbeispiels näher erläutert werden. Es zeigen:

Fig. 1: eine schematische Darstellung eines Heizkreises mit Mischer,
Fig. 2: eine Detailaufnahme des Drei-Wege-Mischerventils mit den entsprechenden Zu- und Abflüssen.

Gegenüber konventionellen Mischerventilen wird für das nachfolgend erläuterte Ausführungsbeispiel der Erfindung vorgeschlagen, die Regelung des Mischerventils auf die Pumpe, d.h. die Pumpensteuerung zu übertragen. Daraus ergeben sich im Wesentlichen zwei Vorteile:

1. Da der Heizungspumpe i.d.R. die Temperatur ihres Förderstroms bekannt ist, kann auf den zusätzlichen Temperatursensor 5 (s. Figur 1) verzichtet werden. Weiterhin kann auch auf eine separate Steuereinheit des Mischers 2 verzichtet werden.

2. Wenn die Heizungspumpe die Steuerung des Mischers übernimmt, kann sie gleichzeitig durch geeignete Ansteuerung des Mischers 2 die Vor- und Rücklauftemperatur ermitteln. Der Algorithmus zur Bestimmung der Vor- und Rücklauftemperatur wird im Folgenden vorgestellt.

Bestimmung der Vor- und Rücklauftemperatur

Figur 2 zeigt schematisch die Zu- und Abflüsse eines Drei-Wege-Ventils. Die Schieberstellung S des Drei-Wege-Ventils kann Werte zwischen null und eins annehmen. Bei der Schieberstellung S = 0 wird nur das Medium aus dem Kessel in den Vorlauf eingespeist. Bei S = 1 wird nur das Medium aus dem Rücklauf in den Vorlauf eingespeist. Für alle anderen Schieberstellungen teilen sich die Förderströme gemäß Gl. 3 auf.

$$S = 0 \qquad \rightarrow T_V = T_K \qquad\qquad (Gl.\,1)$$

$$S = 1 \qquad \rightarrow T_V = T_R \qquad\qquad (Gl.\,2)$$

$$0 \leq S \leq 1 \rightarrow T_V = T_R \cdot S + T_K \cdot (1 - S) \qquad (Gl.\,3)$$

Gleichung 3 besteht aus den bekannten Parametern $S$ (von der Pumpe eingestellt) sowie der Temperatur im Vorlauf $T_V$ (von der Pumpe erfasst, sofern sie im Vorlauf eingebaut ist). Es bleiben die zwei unbekannten Größen $T_R$ und $T_K$. Die Pumpe kann jetzt die Schieberstellung $S$ kurzzeitig variieren. Wenn sie zwei Schieberstellungen eingestellt hat, ergeben sich zwei Wertepaare für $T_R$ und $T_K$ und mittels Gleichung 3 können alle unbekannten Temperaturen bestimmt werden. Wenn mehr als zwei Schieberstellungen angefahren werden, erfährt die Berechnung eine höhere Robustheit. Da die Pumpe im geregelten Betrieb ohnehin permanent die Schieberstellung variiert, wird auch permanent die Vor- und Rücklauttemperatur erfasst. Nur im stationären Zustand würde sich die Schieberstellung nicht ändern. Im stationären Zustand wären aber auch Vor- und Rücklauftemperatur stabil, sodass permanent ausreichend Informationen vorliegen.

Anwendungen der Pumpe bei Kenntnis der Vor- und Rücklauftemperatur

Das Wissen der Vor- und Rücklauftemperatur kann jetzt von der Pumpe genutzt werden. Zum einen kann ein Wärmemengenzähler implementiert werden, da alle notwendigen Größen (Förderstrom $Q$, Rücklauftemperatur $T_R$ und Vorlauftemperatur $T_V$) zur Berechnung der Wärmemenge vorhanden sind.

Zum anderen können Mischer und Pumpe als Mehrgrößensystem betrieben werden und dadurch den Wärmeeintrag ins Gebäude effizienter gestalten. Dieser effiziente Betrieb wird im Folgenden beschrieben:
Die Heizleistung, die durch die Heizkörper ins Gebäude eingetragen wird, berechnet sich gemäß der folgenden Gleichung Gl. 4

$$P_H = c_P \cdot \rho \cdot Q \cdot (T_V \cdot T_R) \qquad\qquad (Gl.\,4),$$

wobei $P_H$ der Leistungsabgabe an den Heizkörpern entspricht, $c_P$ die Wärmekapazität von Wasser, $Q$ der Förderstrom der Pumpe und $\rho$ die Dichte von Wasser ist. $T_V$ steht für die Temperatur des Mediums aus dem Drei- Wege-Ventil (Vorlauftemperatur) und $T_R$ für die Temperatur des Mediums im Rücklauf. Zu beachten ist, dass die Dichte vom Wasser abhängig von der Mediumtemperatur ist. Diese Abhängigkeit kann ausreichend angenähert werden durch den Mittelwert zwischen Vor- und Rücklauf ($T_V$ - $T_R$)/2).

Die Pumpe kann jetzt über die Mischerstellung S direkt die Vorlauftemperatur $T_V$ einstellen sowie über ihre Drehzahl den Förderstrom $Q$ verändern. Sofern keine Unterversorgung auftritt, bleibt die Heizleistung $P_H$ permanent gleich, da die Heizkörper bedarfsgeregelt sind.

Wenn beispielsweise die Pumpe die Drehzahl und dadurch den Förderstrom $Q$ erhöht, werden entweder die Thermostatventile schließen und der Förderstrom $Q$ bleibt nahezu konstant oder aber die Differenz zwischen Vor- und Rücklauftemperatur ($T_V$ - $T_R$) nimmt ab. Für beide Szenarien bleibt die Heizleistung $P_H$ damit nahezu konstant.

Das gleiche gilt, wenn die Pumpe die Vorlauftemperatur $T_V$ durch die Ansteuerung des Mischerventils verändert. Entweder korrigieren die Thermostatventile der Heizkörper den zunehmenden Wärmeeintrag über den Förderstrom $Q$ oder aber die Rücklauftemperatur passt sich der veränderten Vorlauftemperatur an, so dass die Differenz ($T_V$ - $T_R$) abnimmt.

Erst wenn die Pumpe entweder Drehzahl ober Vorlauftemperatur soweit abgesenkt hat, dass sich eine Unterversorgung einstellt, wird die Heizleistung $P_H$ ebenfalls abnehmen. Auf diese Weise lässt sich exakt der Bereich bestimmen, ab dem eine Unterversorgung auftritt. Mit diesem Wissen kann die Pumpe jetzt Förderstrom $Q$ und Vorlauftemperatur $T_V$ so einstellen, dass das Heizsystem knapp über der Unterversorgung arbeitet. Dieser Zustand erhöht die Energieeffizienz des gesamten Heizkreislaufs, denn ein zu hoher Förderstrom führt zu einer zu hohen Pumpendrehzahl und erhöht somit den Stromverbrauch der Pumpe. Eine zu hohe Vorlauftemperatur führt zu erhöhten Wärmeverlusten im Rohrleitungssystem.

Daher sollten beide Werte möglichst niedrig eingestellt werden. Die Abhängigkeiten zwischen Förderstrom $Q$ und Vorlauftemperatur $T_V$ sollten wiederrum so gewählt werden, dass eine niedrige Vorlauftemperatur $T_V$ Priorität gegenüber einer niedrigen Pumpendrehzahl hat, denn die Wärmeverluste in den Rohrleitungen sind energetisch ungünstiger als der Stromverbrauch der Pumpe.

## Patentansprüche

1. Verfahren zur Steuerung einer Anordnung umfassend eine Heizungspumpe (4) für die Umwälzung eines Heizungsmediums in einem geschlossenen Heizkreis und Drei-Wege-Mischerventil (2), dessen erster Zulauf mit einem Heizkessel (1), dessen zweiter Zulauf mit dem Rücklauf (7) eines Lastkreises (3) und dessen Ablauf mit dem Vorlauf (6) des Lastkreises verbunden ist, wobei der Heizungspumpe (5) die Temperatur des durch die Pumpe (5) durchströmenden Förderstroms (Q) bekannt ist wobei eine Steuerung das Mischerventil (2) mit wenigstens zwei unterschiedlichen Schaltstellungen (S) zur Einstellung eines unterschiedlichen Mischverhältnisses der beiden Zuläufe ansteuert und die Temperatur des durch die Pumpe (4) durchströmenden Förderstroms (Q) erfasst wird, **dadurch gekennzeichnet, dass** unter Berücksichtigung des Mischverhältnisses für die wenigstens zwei Schaltstellungen (S) und der für jede Schaltstellung (S) erfassten Förderstromtemperatur die Mediumtemperatur an wenigstens einem der Ventilanschlüsse, der nicht mit der Heizungspumpe (4) verbunden ist, berechnet wird.

2. Verfahren nach Anspruch 1, **dadurch gekennzeichnet, dass** die Temperatur des durch die Pumpe (4) durchströmenden Förderstroms (Q) der Vorlauftemperatur (Tv) entspricht und die Steuerung die Mediumtemperatur im Rücklauf berechnet.

3. Verfahren nach einem der vorhergehenden Ansprüche, **dadurch gekennzeichnet, dass** für jede Schaltstellung (S) eine Gleichung mit dem Mischverhältnis für die aktuelle Schaltstellung (S) und den Temperaturwerten an den Ventilanschlüssen als Parameter definiert ist und mittels Gleichsetzverfahren der definierten Gleichungen für die wenigstens zwei Schaltstellungen (S) zumindest eine unbekannte Temperatur durch entsprechende Gleichungsauflösung berechnet wird.

4. Verfahren nach einem der vorhergehenden Ansprüche, **dadurch gekennzeichnet, dass** die Temperatur des Förderstroms (Q) der Pumpe (4) sensorisch erfasst oder durch einen Schätzalgorithmus der Heizungspumpe (4) ermittelt wird.

5. Verfahren nach einem der vorhergehenden Ansprüche, **dadurch gekennzeichnet, dass** unter Verwendung der bekannten Temperatur des Förderstroms (Q) sowie der berechneten Vorlauf- bzw. Rücklauftemperatur (Tv, $T_R$) ein Wärmemengenzähler in der Steuerung implementiert ist.

6. Verfahren nach einem der vorhergehenden Ansprüche, **dadurch gekennzeichnet, dass** die Steuerung auf Grundlage des bekannten Förderstroms (Q) der Heizungspumpe (4) und der bekannten bzw. berechneten Vorlauf- und Rücklauftemperatur (Tv, $T_R$) die an den Lastkreis (3) abgegebene Heizleistung ($P_H$) ermittelt und die Vorlauftemperatur (Tv) durch Regelung des Mischerventils (2) sowie der Förderstrom (Q) der Heizungspumpe (4) durch Regelung der Pumpendrehzahl reduziert, bis eine Unterversorgung des Lastkreises (3) erkannt wird.

7. Verfahren nach Anspruch 6, **dadurch gekennzeichnet, dass** die Steuerung das Mischerventil (2) und/oder die Drehzahl derart einstellt, dass ein energetisch günstiger Betrieb mit möglichst niedriger Drehzahl und niedriger Vorlauftemperatur (Tv) vorliegt, bei diesem gerade keine Unterversorgung auftritt.

8. Verfahren nach Anspruch 7, **dadurch gekennzeichnet, dass** bei der Einstellung des energetisch günstigen Betriebes eine Reduzierung der Vorlauftemperatur (Tv) höher priorisiert wird als eine Reduzierung der Pumpendrehzahl.

9. Verfahren zum Betrieb einer Heizungsanlage bestehend aus mehreren separierten Lastkreisen (3) und einer gemeinsamen Wärmequelle, wobei pro Lastkreis (3) wenigstens eine Anordnung bestehend aus einer Heizungspumpe (4) und einem Drei-Wege-Mischerventil (2), dessen erster Zulauf mit einem Heizkessel (1), dessen zweiter Zulauf mit dem Rücklauf des Lastkreises (3) und dessen Ablauf mit dem Vorlauf des Lastkreises verbunden ist, eingesetzt wird, wobei der Heizungspumpe (4) die Temperatur des durch die Pumpe (4) durchströmenden Förderstroms (Q) bekannt ist, **dadurch gekennzeichnet, dass** das Verfahren gemäß einem der vorstehenden Ansprüche durch eine zentrale Steuerung zur Steuerung der Anordnungen bzw. der integrierten Mischerventile (2) oder aber verteilte, den Anordnungen zugeordnete Steuerungen zur Steuerung der jeweiligen Mischerventile (2) ausgeführt wird.

10. Anordnung bestehend aus einer Heizungspumpe (4) für die Umwälzung eines Heizungsmediums in einem geschlossenen Heizkreis und einem Drei-Wege-Mischerventil (2) mit insgesamt drei Anschlüssen sowie einer gemeinsamen Steuerung für die Drehzahlregelung der Heizungspumpe (4) sowie zur Steuerung des Mischerventils (2) für die Regelung der Vorlauftemperatur (Tv), **dadurch gekennzeichnet, dass** die Steuerung konfiguriert ist zur Ausführung des Verfahrens nach einem der Ansprüche 1 bis 8.

11. Anordnung nach Anspruch 10, **dadurch gekennzeichnet, dass** die Steuerung in die Heizungspumpe (4) integriert ist.

12. Heizungspumpe (4) mit integraler Steuerung konfiguriert zur Drehzahlregelung der Pumpe (4) sowie zur Regelung der Vorlauftemperatur (Tv) mittels Ansteuerung eines Drei-Wege-Mischerventils (2), **dadurch gekennzeichnet, dass** die Steuerung zur Durchführung des Verfahrens nach einem der Ansprüche 1 bis 8 konfiguriert ist.

13. Heizungsanlage bestehend aus mehreren separierten Lastkreisen (3) und einer gemeinsamen Wärmequelle, **dadurch gekennzeichnet, dass** pro Lastkreis (3) wenigstens eine Anordnung gemäß einem der Ansprüche 10 oder 11 zur Ausführung des Verfahrens gemäß einem der vorstehenden Ansprüche 1 bis 9 vorgesehen ist, wobei die Steuerung jeder Anordnung in einer zentralen Steuerung zur Steuerung der jeweiligen Mischerventile (2) der Anordnungen vereint ist oder die Steuerungen verteilte, den Anordnungen zugeordnete Steuerungen sind.

**Claims**

1. Method for controlling an arrangement comprising a heating pump (4), which serves for circulation of a heating medium in a closed heating circuit, and a three-way mixer valve (2), whose first inlet is connected to a boiler (1), whose second inlet is connected to the return line (7) of a load circuit (3) and whose outlet is connected to the feed line (6) of the load circuit, wherein the heating pump (5) knows the temperature of the delivery flow (Q) flowing through the pump (5), wherein a controller actuates the mixer valve (2) using at least two different switching positions (S) for setting a different mixing ratio for the two inlets, and the temperature of the delivery flow (Q) flowing through the pump (4) is recorded, **characterized in that**, with account taken of the mixing ratio for the at least two switching positions (S) and the delivery-flow temperature recorded for each switching position (S), the medium temperature is calculated at at least one of the valve ports which is not connected to the heating pump (4).

2. Method according to Claim 1, **characterized in that** the temperature of the delivery flow (Q) flowing through the pump (4) corresponds to the feed-line temperature ($T_V$) and the controller calculates the medium temperature in the return line.

3. Method according to either of the preceding claims, **characterized in that**, for each switching position (S), an equation with the mixing ratio for the present switching position (S) and the temperature values at the valve ports as parameters is defined and, by means of the equalization method for the defined equations for the at least two switching positions (S), at least one unknown temperature is calculated by correspondingly solving for it.

4. Method according to one of the preceding claims, **characterized in that** the temperature of the delivery flow (Q) of the pump (4) is recorded by sensor means or is ascertained by an estimation algorithm of the heating pump (4).

5. Method according to one of the preceding claims, **characterized in that** a heat meter is implemented in the controller, with use being made of the known temperature of the delivery flow (Q) and of the calculated feed-line or return-line temperature ($T_V$, $T_R$).

6. Method according to one of the preceding claims, **characterized in that** the controller ascertains, on the basis of the known delivery flow rate (Q) of the heating pump (4) and the known or calculated feed-line and return-line temperatures ($T_V$, $T_R$), the heating power ($P_H$) output to the load circuit (3) and reduces the feed-line temperature ($T_V$) through regulation of the mixer valve (2) and the delivery flow rate (Q) of the heating pump (4) through regulation of the pump rotational speed until an undersupply of the load circuit (3) is identified.

7. Method according to Claim 6, **characterized in that** the controller sets the mixer valve (2) and/or the rotational speed in such a way that an operation which is favorable in terms of energy and which has as low a rotational speed and as low a feed-line temperature ($T_V$) as possible for undersupply just not to occur is present.

8. Method according to Claim 7, **characterized in that**, in the case of the setting of the operation which is favorable in terms of energy, a reduction in the feed-line temperature ($T_V$) is given higher priority than a reduction in the pump rotational speed.

9. Method for operating a heating system consisting of multiple separated load circuits (3) and a common heat source, wherein, for each load circuit (3), at least one arrangement consisting of a heating pump (4) and a three-way mixer valve (2), whose first inlet is connected to a boiler (1), whose second inlet is connected to the return line of the load circuit (3) and whose outlet is connected to the feed line of the load circuit, is used, wherein the heating pump (4) knows the temperature of the delivery flow (Q) flowing through the pump (4), **characterized in that** a central controller for controlling the arrangements or the integrated mixer valves (2) or else distributed controllers assigned to the arrangements and serving for controlling the respective mixer valves (2) carry out the method according to one of the preceding claims.

10. Arrangement consisting of a heating pump (4), which serves for circulation of a heating medium in a closed heating circuit, and a three-way mixer valve (2), which has in total three ports, and also a common controller for rotational-speed regulation of the heating pump (4) and for control of the mixer valve (2) for the regulation of the feed-line temperature ($T_V$), **characterized in that** the controller is configured for carrying out the method according to one of Claims 1 to 8.

11. Arrangement according to Claim 10, **characterized in that** the controller is integrated in the heating pump (4).

12. Heating pump (4) with an integral controller configured for rotational-speed regulation of the pump (4) and for regulation of the feed-line temperature ($T_V$) by means of actuation of a three-way mixer valve (2), **characterized in that** the controller is configured for carrying out the method according to one of Claims 1 to 8.

13. Heating system consisting of multiple separated load circuits (3) and a common heat source, **characterized in that**, for each load circuit (3), provision is made of at least one arrangement according to either of Claims 10 and 11 for carrying out the method according to one of preceding Claims 1 to 9, wherein the controller of each arrangement is combined in a central controller for controlling the respective mixer valves (2) of the arrangements or the controllers are distributed controllers assigned to the arrangements.

**Revendications**

1. Procédé de commande d'un ensemble comprenant une pompe de chauffage (4) destinée au recyclage d'un milieu de chauffage dans un circuit de chauffage fermé et une vanne mélangeuse à trois voies (2) dont la première entrée est reliée à une chaudière (1), dont la deuxième entrée est reliée à la conduite de retour (7) d'un circuit de charge (3) et dont la sortie est reliée à la conduite aller (6) du circuit de charge, la température du flux de refoulement (Q) circulant à travers la pompe (5) étant connue de la pompe de chauffage (5), une commande commandant la vanne mélangeuse (2) avec au moins deux positions de commutation (S) différentes pour régler un rapport de mélange différent des deux entrées et la température du flux de refoulement (Q) circulant à travers la pompe (4) étant détectée, **caractérisé en ce que** la température du milieu au niveau d'au moins un des raccords de vanne qui n'est pas relié à la pompe de chauffage (4) est calculée avec prise en compte du rapport de mélange pour les au moins deux positions de commutation (S) et de la température de flux de refoulement détectée pour chaque position de commutation (S),.

2. Procédé selon la revendication 1, **caractérisé en ce que** la température du flux de refoulement (Q) circulant à travers la pompe (4) correspond à la température de conduite aller ($T_V$) et la commande calcule la température du milieu dans la conduite de retour.

**3.** Procédé selon l'une des revendications précédentes, **caractérisé en ce que**, pour chaque position de commutation (S), une équation est définie avec le rapport de mélange pour la position de commutation actuelle (S) et les valeurs de température au niveau des raccords de vanne comme paramètres et au moins une température inconnue est calculée par résolution d'équation correspondante au moyen d'un procédé d'égalisation des équations définies pour les au moins deux positions de commutation (S).

**4.** Procédé selon l'une des revendications précédentes, **caractérisé en ce que** la température du flux de refoulement (Q) de la pompe (4) est détectée par des capteurs ou déterminée par un algorithme d'estimation de la pompe de chauffage(4).

**5.** Procédé selon l'une des revendications précédentes, **caractérisé en ce qu'**un compteur de quantité de chaleur est mis en œuvre dans la commande à l'aide de la température connue du flux de refoulement (Q) ainsi que de la température de conduite aller ou de conduite de retour ($T_V$, $T_R$) calculée.

**6.** Procédé selon l'une des revendications précédentes, **caractérisé en ce que** la commande détermine la puissance de chauffage ($P_H$) délivrée au circuit de charge (3) sur la base du flux de refoulement (Q) connu de la pompe de chauffage (4) et des températures de conduite aller et de conduite de retour ($T_V$, $T_R$) connues ou calculées et réduit la température de conduite aller ($T_V$) en régulant la vanne mélangeuse (2) et le flux de refoulement (Q) de la pompe de chauffage (4) en régulant le vitesse de rotation de la pompe jusqu'à ce qu'une sous-alimentation du circuit de charge (3) soit détectée.

**7.** Procédé selon la revendication 6, **caractérisé en ce que** la commande règle la vanne mélangeuse (2) et/ou la vitesse de rotation de manière à avoir un fonctionnement énergétiquement favorable, avec une vitesse de rotation et une température de conduite aller ($T_V$) les plus basses possible, pour lequel aucune sous-alimentation ne se produit.

**8.** Procédé selon la revendication 7, **caractérisé en ce que**, lors du réglage du fonctionnement énergétiquement favorable, une réduction de la température de conduite aller ($T_V$) a une priorité plus élevée qu'une réduction de la vitesse de rotation de la pompe.

**9.** Procédé de fonctionnement d'une installation de chauffage comprenant plusieurs circuits de charge séparés (3) et une source de chaleur commune, dans lequel, par circuit de charge (3), au moins un ensemble est utilisé qui comprend une pompe de chauffage (4) et une vanne mélangeuse à trois voies (2) dont la première entrée est reliée à une chaudière (1), dont la deuxième entrée est reliée à la conduite de retour du circuit de charge (3) et dont la sortie est reliée la conduite aller du circuit de charge, la température du flux de refoulement (Q) circulant à travers la pompe (4) étant connue de la pompe de chauffage (4), **caractérisé en ce que** le procédé selon l'une des revendications précédentes est mise en œuvre par une commande centrale destinée à commander les ensembles ou les vannes mélangeuses intégrées (2), ou bien des commandes réparties associées aux ensembles destinées à commander des vannes mélangeuses (2) respectives.

**10.** Ensemble comprenant une pompe de chauffage (4) destinée au recyclage d'un milieu de chauffage dans un circuit de chauffage fermé et une vanne mélangeuse à trois voies (2) comprenant au total trois raccords ainsi qu'une commande commune destinée à réguler la vitesse de rotation de la pompe de chaleur (4) et à commander la vanne mélangeuse (2) afin de réguler la température de conduite aller ($T_V$), **caractérisé en ce que** la commande est conçue pour mettre en œuvre le procédé selon l'une des revendications 1 à 8.

**11.** Ensemble selon la revendication 10, **caractérisé en ce que** la commande est intégrée dans la pompe de chauffage (4).

**12.** Pompe de chauffage (4) à commande intégrée conçue pour réguler la vitesse de rotation de la pompe (4) et pour réguler la température de conduite aller ($T_V$) en commandant une vanne mélangeuse à trois voies (2), **caractérisée en ce que** la commande est conçue pour mettre en œuvre le procédé selon l'une des revendications 1 à 8.

**13.** Installation de chauffage comprenant plusieurs circuits de charge (3) séparés et une source de chaleur commune, **caractérisé en ce que** chaque circuit de charge (3) comporte au moins un ensemble selon l'une des revendications 10 ou 11 destiné à mettre en œuvre le procédé selon l'une des revendications précédentes 1 à 9, la commande de chaque ensemble faisant partie d'une commande centrale destinée à commander les vannes mélangeuses (2) respectives des ensembles ou les commandes étant des commandes réparties associées aux ensembles.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3037704 A1